# EUROPEAN PATENT APPLICATION

(11) **EP 4 664 728 A1**
(43) Date of publication of application: **17.12.2025**
(21) Application number: 25180711.1
(22) Date of filing: 04.06.2025
(51) Int. Cl.: H02K 5/18, H02K 9/19, H02K 9/22, H02K 11/33, H02K 3/04, H01R 3/00, H02M 1/00

(54) **MACHINE INTEGRATED SEGMENTED INVERTERS CONCEPT**

(30) Priority: 10.06.2024 US 202418738357
(71) Applicant: Cummins Inc., Columbus, IN 47201 (US)
(72) Inventor: LEONARSKI, Jaroslaw, 47201 Columbus, Indiana (US); TRAN, Allen, 47201 Columbus, Indiana (US); GHEAJA, Zachary, 47201 Columbus, Indiana (US); TENAGLIA, Gabriel, 47201 Columbus, Indiana (US)
(74) Representative: Cleveland Scott York

(57) **Abstract**

An electrical machine includes a cooling jacket defining a plurality of recess cavities, the cooling jacket configured to maintain the temperature of the electrical machine below a pre-determined threshold. The electrical machine also includes a plurality of segmented inverters, each of the plurality of segmented inverters received within one of the plurality of recess cavities of the cooling jacket. The electrical machine also includes plurality of stator windings electrically coupling the plurality of the segmented inverters to an alternating current (AC) terminal. The electrical machine also includes a direct current (DC) power connection ring. The power connection ring includes a positive DC power connection electrically coupling the segmented inverter with a positive DC power source and a negative DC power connection electrically coupling the segmented inverter with a negative DC power source.

## Description

### TECHNICAL FIELD

The present disclosure relates generally to electrical machines and more specifically to multiphase electrical machines.

### BACKGROUND

Electrical machines, such as motors and generators, may include a rotor mounted on a shaft and arranged to rotate inside a stator. The rotor comprises rotor windings or permanent magnets. The rotor windings or permanent magnets produce a rotating magnetic field which crosses an air gap between the rotor and the stator. The stator may include a plurality of coil windings that are wound around the teeth of the stator to form separate poles. The coil windings on certain poles are synchronized so as to provide the same magnetic polarity, forming a rotating magnetic field to cause rotation in the rotor that is coupled with the stator. Each of the coil windings is electrically coupled with a power inverter such that the inverter converts the direct current (DC) power provided by a DC energy source to an alternating current (AC) power to be used to control the polarity of the poles.

### SUMMARY

In one embodiment, an electrical machine includes a cooling jacket defining a plurality of recess cavities, the cooling jacket configured to maintain the temperature of the electrical machine below a pre-determined threshold. The electrical machine also includes a plurality of segmented inverters, each of the plurality of segmented inverters received within one of the plurality of recess cavities of the cooling jacket. The electrical machine also includes plurality of stator windings electrically coupling the plurality of the segmented inverters to an alternating current (AC) terminal. The electrical machine also includes a DC power connection ring. The power connection ring includes a positive DC power connection electrically coupling the segmented inverter with a positive DC power source and a negative DC power connection electrically coupling the segmented inverter with a negative DC power source.

In some embodiments, each of the plurality of inverters operate independently of each other. In some embodiments, the DC power connection ring comprises lamination, the lamination isolating the positive DC power connection and the negative DC power connection in the DC power connection ring. In some embodiments, each of the plurality of segmented inverters include a control module configured to control the functionality of the segmented inverter, a power module electrically coupled to the control module, at least one positive DC busbar to which the positive DC power connection is electrically coupled, and at least one negative DC busbar to which the negative DC power connection is electrically coupled. In some embodiments, each of the plurality of segmented inverters are three-phase power inverters. In some embodiments, the DC power connection ring is coupled to a bottom side of the cooling jacket.

In some embodiments, the electrical machine includes a back plate and a front plate, wherein the back plate is on the opposite end of the electrical machine from the front plate and wherein the back plate and the front plate make up at least a portion of a housing for the electrical machine. In some embodiments, the electrical machine includes a stator comprising a plurality of teeth projecting radially inwards, wherein the plurality of teeth defines a plurality of slots that accommodate the plurality of stator windings. In some embodiments, the electrical machine includes a rotor disposed within the stator and configured to rotate within the stator to generate electricity for the electric machine. In some embodiments, the plurality of stator windings are pre-formed coils which are placed on the plurality of teeth. In some embodiments, the plurality of stator windings are at least one of flat wire windings or hairpin windings. In some embodiments, the plurality of stator windings are grouped into a plurality of sub-groups of stator windings and wherein each of the plurality of sub-groups of stator windings are coupled to a single segmented inverter of the plurality of segmented inverters.

In some embodiments, each of the plurality of sub-groups of stator windings are three-phase systems of windings which create three complete and independent phases without being connected to the other sub-groups of stator windings. In some embodiments, each of the plurality of sub-groups of stator windings are coupled to the plurality of segmented inverters through a plurality of terminals which are structured as isolated separators. In some embodiments, the cooling jacket includes eight recess cavities configured to receive eight segmented inverters. In some embodiments, the plurality of segmented inverters includes a thin coat of thermal interface material configured enhance the thermal coupling between the plurality of segmented inverters and the plurality of recessed cavities.

This summary is illustrative only and is not intended to be in any way limiting.

### BRIEF DESCRIPTION OF THE FIGURES

The disclosure will become more fully understood from the following detailed description, taken in conjunction with the accompanying figures, wherein like reference numerals refer to like elements, in which:
FIG. 1 shows perspective view an electrical machine, according to an example embodiment;
FIG. 2 shows a perspective view of a DC power connection ring, according to an example embodiment;
FIG. 3A shows a perspective view of a cooling jacket, according to an example embodiment;
FIG. 3B shows a perspective view of a cooling insert of the cooling jack of FIG. 3A, according to an example embodiment;
FIG. 4 shows a perspective view of a rotor and stator combination with multiple windings, according to an example embodiment;
FIG. 5 shows a front perspective view of a segmented inverter, according to an example embodiment;
FIG. 6 shows a back perspective view of the segmented inverter of FIG. 5.
FIG. 7 shows an isometric view of an electrical machine, according to an example embodiment;
FIG. 8 shows a front view of the electrical machine of FIG. 7;
FIG. 9 shows a rear view of the electrical machine of FIG. 7;
FIG. 10 shows a left view of the electrical machine of FIG. 7;
FIG. 11 shows a right view of the electrical machine of FIG. 7;
FIG. 12 shows a top view of the electrical machine of FIG. 7; and

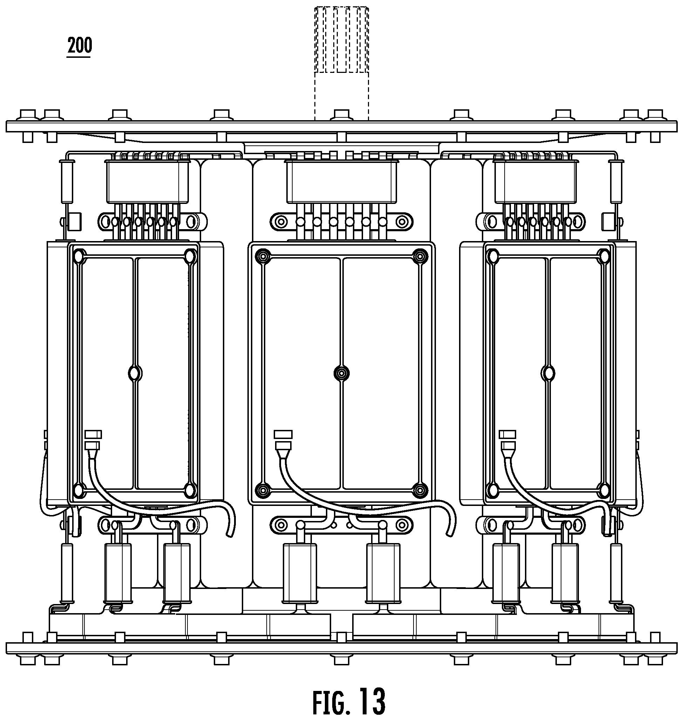

FIG. 13 shows a bottom view of the electrical machine of FIG. 7.

### DETAILED DESCRIPTION

Following below are more detailed descriptions of various concepts related to, and implementations of a cooling system for an electric machine. The systems introduced herein may be implemented in various ways, as the described concepts are not limited to any particular manner of implementation. Examples of specific implementations and applications are provided primarily for illustrative purposes.

Before turning to the figures, various embodiments of the electric machine and the components thereof, are described herein. It should be understood that, while individual components are described in detail, the details should be considered as examples only. Further, the details may include variations described herein. Accordingly, it should be understood that, although individual components may be described relative to an embodiment, any of the components may be used in any other embodiment described herein, unless otherwise noted.

The embodiments described herein relate generally to an improved electric machine which utilizes segmented inverters. According to various embodiments, the electric machine includes multiple segmented inverters which are distributed around the perimeter of a cooling jacket for the electrical machine. In the embodiments described herein, the segmented inverters share a common cooling mechanism through the cooling jacket. In some embodiments, the electrical machine includes stator windings which are directly connected to the AC terminal for the segmented inverters on one side of the machine. The second side of the machine has DC terminals and DC connection rings to distribute the battery power to the inverters to run the electrical machine.

By utilizing segmented inverters which are each connected independently to the stator windings for the electrical machine, the electrical machine advantageously has built in redundancy in case one of the inverters is damaged and cannot function. The improved electrical machine described herein includes segmented inverters which function independently so that the electrical machine can continue to function even in the event of a failure of a portion of the segmented inverters distributed around the electrical machine. Further, the modular nature of the segmented inverters allows for easier maintenance and replacement of any damaged segmented inverters.

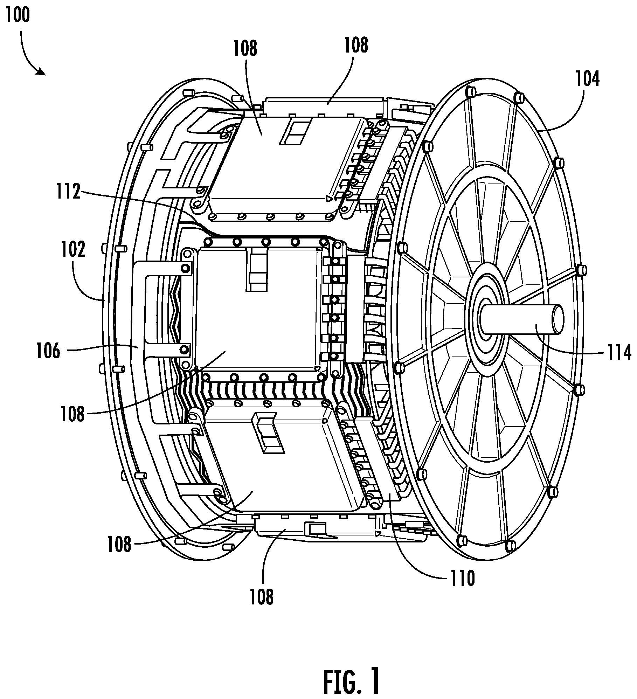

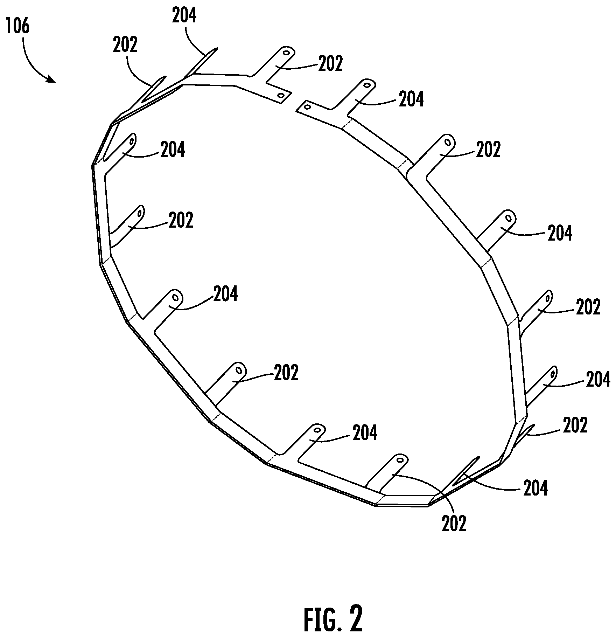

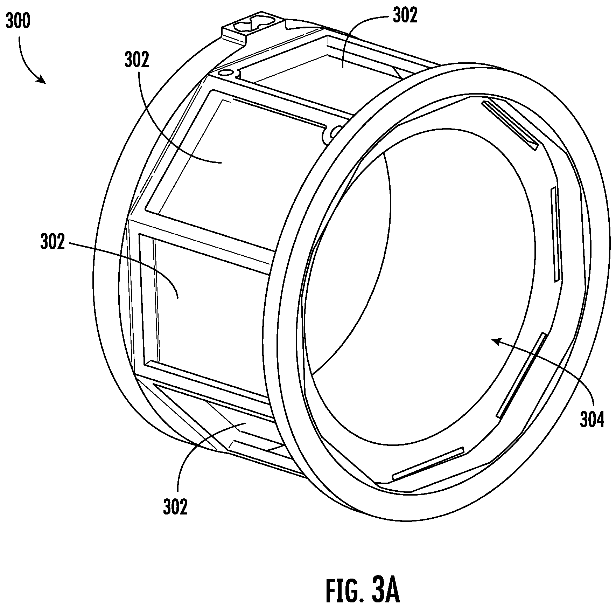

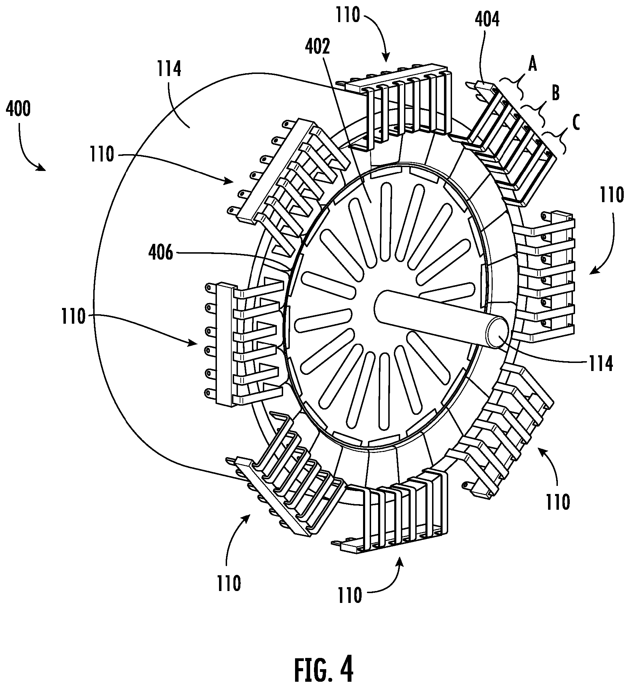

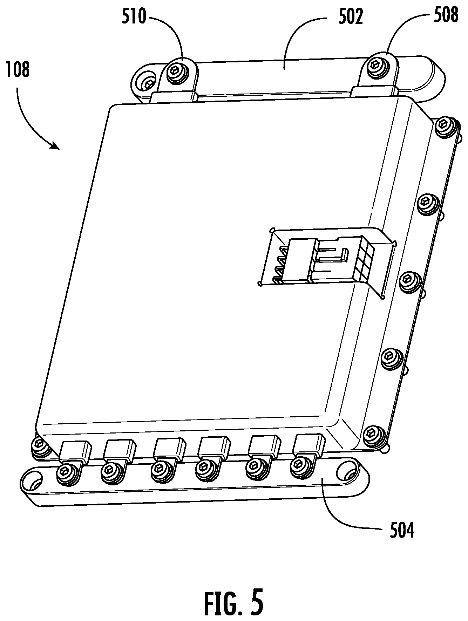

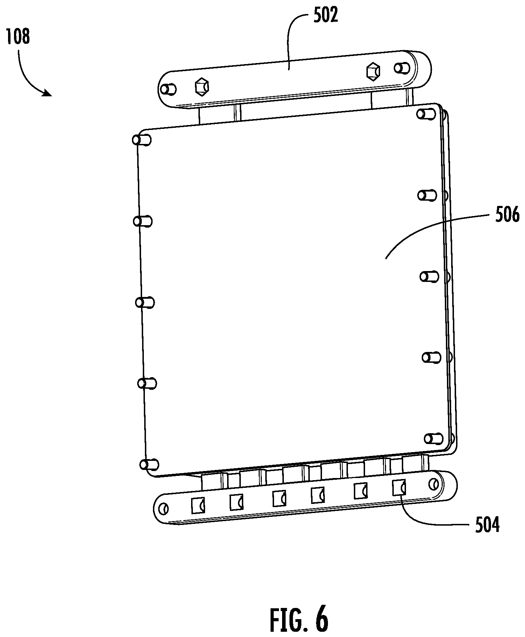

FIG.1 is a perspective view of an electrical machine 100, according to an example embodiment. In some embodiments, the electric machine 100 can be or include a motor generator configured to generate motion. In some embodiments, the electric machine 100 can be or include a device configured to generate electricity. In some embodiments, the electric machine 100 includes a cooling jacket 300 which is shown and described in more detail in FIG. 3A-3B, a rotor and stator combination 400 which is shown and described in more detail in FIG. 4, a power connection ring 106 which is shown and described in more detail in FIG. 2, and a plurality segmented inverters 108 which are shown and described in more detail in FIGS. 5-6. In various embodiments described herein, the electric machine 100 may include more or fewer components.

In some embodiments, the electrical machine 100 comprises the cooling jacket 300 defining a plurality of recess cavities 302, the cooling jacket 300 configured to maintain the temperature of the electrical machine 100 below a pre-determined threshold. The electrical machine 100 comprises a plurality of segmented inverters 108, each of the plurality of segmented inverters 108 received within one of the plurality of recess cavities 302 of the cooling jacket. The electrical machine 100 comprises a plurality of stator windings 110 electrically coupling the plurality of the segmented inverters 108 to an alternating current (AC) terminal. The electrical machine 100 comprises a direct current (DC) power connection ring 106. The DC power connection ring 106 includes a positive DC power connection 204 electrically coupling the segmented inverter 108 with a positive DC power source. The DC power connection ring 106 includes a negative DC power connection 202 electrically coupling the segmented inverter 108 with a negative DC power source.

In some embodiments, the electrical machine 100 can include a back plate 102 and a front plate 104 which are on opposite ends of the electrical machine 100. In some embodiments, the back plate 102 and the front plate 104 make up at least a portion of the housing for the electrical machine 100.

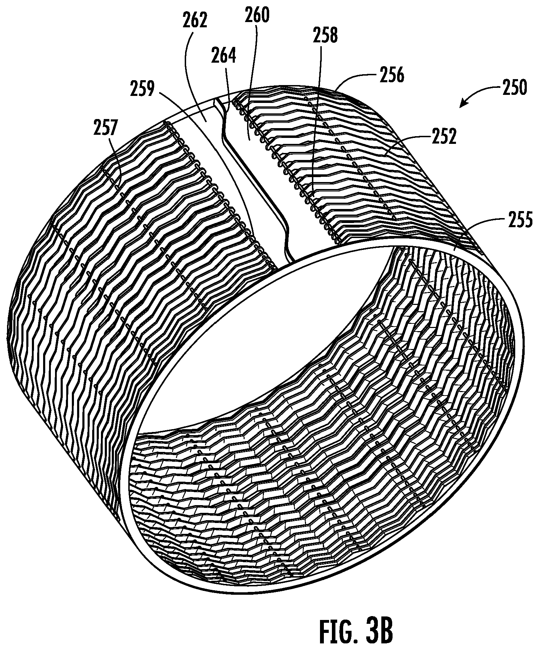

Referring now to FIGS. 3 and 4, the rotor and stator combination 400 may be housed inside the cooling jacket 300. The rotor and stator combination 400 includes a rotor 402 and a stator 406 with stator windings 110 and a shaft 114. The rotor 402 is a rotating component of the electric machine 100. The rotor and stator combination 400 is disposed radially inward from the cooling jacket 300. The rotor and stator combination 400 defines a portion of the electromagnetic circuit. A magnetic field generated by the stator 406 interacts with an opposing magnetic field of the rotor 402, causing the rotor 402 to rotate. The induction of rotor field by stator field is phenomena used in the induction motor technology. In particular, rotating the rotor 402 inside the stator 406 causes a to be induced in the stator windings which produces the electricity for the electrical machine 100.

The rotor 402 is coupled to the shaft 114, such that rotation of the rotor 402 causes rotation of the shaft 114. The shaft 114 may lie on a center axis of the electrical machine 100. For example, the center axis extends through a center point of the electric machine 100. As used herein, the term "axis" describes a theoretical line extending through the centroid (e.g., center of mass, geometric center, etc.) of an object. The object is centered on the axis. The object is not necessarily cylindrical (e.g., a non-cylindrical shape may be centered on an axis, etc.). Furthermore, the object is not necessarily on the axis (e.g., a centroid of a hollow object may be on the axis, but no portion of the object needs to be on the axis).

The stator 406 can be a solid core or a laminated core. When the stator 406 is a laminated core, the stator 406 includes a plurality of thin metal sheets (i.e., laminations") that can reduce energy losses in the electromagnetic circuit. The laminations are stacked together forming a hollow cylinder.

The stator 406 includes a plurality of teeth projecting radially inwards to define slots that accommodate the stator windings 110. In some embodiments, the stator windings 110 are in the form of coils located on the teeth and may be wound onto the teeth. In other embodiments, the stator windings 110 may be pre-formed coils may be slid onto the teeth. In some embodiments, the stator windings 110 may be flat wire windings or hairpin windings. In some embodiments, the stator windings 110 may be separated into a plurality of groups of stator windings 110 which are each connected to their associated terminals 404. In some embodiments, the terminals 404 may be an isolated separator which facilitates the connection of the stator windings 110 to the segmented inverters 108.

In some embodiments, the stator windings 110 may be three-phase system of windings. Particularly, each of the stator windings 110 include coils A, B, and C (representing 3 phases) which are all independently and completely connected to only one segmented inverter 108. For example, the whole coil A (e.g., from beginning to the end) is connected to a single segmented inverter 108 and forms a complete phase without having to be connected to any of the other groups of stator winding 110.

In some embodiments, each of the plurality of segmented inverters 108 operate independently of each other. The electrical machine 100 includes independent stator windings 110 which include each of the 3 phases wholly connected to each of the individual segmented inverters 108 so that the electrical machine 100 can continue to operate even if one of the segmented inverters 108 malfunctions. In other embodiments, the stator windings 110 may be a six-phase system of windings or any other number of phases. However, regardless of the number of phases included in the stator windings 110, the independent function of the stator windings 110 and the segmented inverters 108 is maintained as described above. The independent function of the stator windings 110 and the segmented inverters 108 provides a variety of benefits including reducing the amount of AC cable losses because the stator windings 110 are directly connected to the segmented inverters 108 which are proximally close and housed within the electrical machine 100 as opposed to being connected through an extended AC cable to an inverter outside the electrical machine.

In some embodiments, the rotor 402 is rotated by a prime mover (not shown) and the rotating magnetic field developed by the permanent magnets causes an electrical current to flow in the stator windings 110.

Referring now to FIG. 3A, the cooling jacket 300 is shown, according to an example embodiment. The cooling jacket 300 is a stationary, or substantially stationary, component of the electric machine 100. The cooling jacket 300 defines part of an electromagnetic circuit of the electric machine 100. The cooling jacket 300 is a shared cooling system which is distributed across the whole electrical machine 100 as opposed to having individual cooling systems for each of the inverters.

The cooling jacket 300 is disposed radially outward from the stator 406. In some embodiments, the cooling jacket 300 is coupled to the stator 406. The cooling jacket 300 is part of or at least partially defines the cooling system for the electric machine 100. The cooling jacket 300 facilitates the transferring of thermal energy from the electric machine 100 to a fluid, such as a coolant. In some embodiments, the cooling jacket 300 is configured to receive coolant fluid and distribute the coolant fluid around the electrical machine. In this way, the cooling jacket 300 can advantageously reduce the temperature of the electric machine 100. In some embodiments, the cooling jacket 300 includes one or more flow channels within the jacket which are configured to circulate fluid which cools the electrical machine 100. In some embodiments, the flow channels are configured to receive fluid via one or more passageways which are fluidly coupled with a fluid source outside the electrical machine 100.

The cooling jacket 300 may include a cooling insert 250. The insert 250 includes a plurality of ribs 252 extending between the inner surfaces of the stator jacket 300. The plurality of ribs 252 define a plurality of flow channels therebetween. The plurality of flow channels are fluidly coupled to a passageway into the electrical machine 100. The passageway extends to the cavity of the cooling jacket. The passageway enables fluid communication between a fluid source (e.g., a fluid reservoir, a fluid pump, a fluid heat exchanger, etc.) and the cavity of the cooling jacket.

In some embodiments, the insert 250 includes an inlet portion 260 (shown in FIG. 3B) disposed at a first end of the plurality of ribs 252. In some embodiments, the insert 250 includes an outlet portion 262 disposed at a second end of the plurality of ribs 252, such that each of the plurality of ribs 252 extends from the inlet portion 260 to the outlet portion 262. In some embodiments, the insert 250 includes an insert wall 264 disposed between the inlet portion 260 and the outlet portion 262, such that the insert wall 264 fluidly separates the inlet portion 260 and the outlet portion 262. The insert 250 includes a plurality of ribs 252. Each rib of the plurality of ribs 252 extends between the inner surfaces of the cooling jacket 300. As shown in FIG. 3B, each rib of the plurality of ribs 252 extends in a circumferential direction from a first rib end 258 to a second rib end 259. The first rib end 258 is spaced away from the second rib end 259 in a circumferential direction. In some embodiments, the ribs 252 are spaced apart from each other in an axial direction. Each adjacent pair of ribs 252 defines a flow channel therebetween. More specifically, the flow channels are defined by the axial space between the ribs 252 and the radial space between inner surfaces of the cooling jacket 300.

In some embodiments, the ribs 252 form a pattern. In the embodiment shown in FIG. 3B, the pattern is an angled wave pattern where adjacent segments of the ribs 252 are angled with respect to each other. In other embodiments, the ribs 252 may have a different pattern, such as a smooth wave pattern where adjacent segments of the ribs 252 are curved with respect to each other, or other suitable pattern.

In some embodiments, at least one rib 252 of the plurality of ribs 252 is an end rib. The end rib is disposed at an axial end of the insert 250. In some embodiments, the insert 250 includes two end ribs. For example, the insert includes a first end rib disposed at a first axial end of the insert 250 and a second end rib disposed at a second axial end of the insert 250, opposite the first axial end.

In some embodiments, the insert 250 includes a first end wall 255 and a second end wall 256. The first end wall 255 is disposed at the first axial end of the insert 250. The second end wall is disposed at the second axial end of the insert 250, opposite the first end. The first end wall 255 and the second end wall 256 extend around the circumference of the insert 250. The first end wall 255 and the second end wall 256 each extend radially between the inner surfaces of the cooling jacket 300. In this way, the first end wall 255 and the second end wall 256 cooperate to define, at least partially, an internal volume of the insert 250.

In some embodiments, the axial space between the ribs 252 is uniform or substantially uniform. In other embodiments, the axial space between the ribs 252 is not uniform. In an example embodiment, the ribs 252 may be spaced apart from each other such that the axial space between the ribs increases towards the center (e.g., an axial center) of the insert 250. For example, the first three ribs of the insert 250 are spaced apart from each other such that a first rib (e.g., an end rib) is spaced away from a second rib at a first axial distance, and the second rib is spaced away from the third rib at second axial distance, greater than the first axial distance. Thus, the flow channels proximate the axial ends of the insert 250 have a smaller axial width than the flow channels proximate the axial center of the insert 250. The flow channels proximate the axial ends of the insert 250 have relatively smaller axial widths. The flow channels proximate the axial center of the insert 250 have relatively larger axial widths. The flow channels between the axial center and the axial ends of the insert 250 have axial widths between the relatively smaller axial widths and the relatively larger axial widths.

In some embodiments, the insert 250 includes one or more support members 257 (e.g., rods, rails, etc.). The support members 257 extend in an axial direction. The support members 257 intersect each of the ribs 252. The support members 257 extend axially through the flow channels, but do not substantially prevent the flow of fluid therethrough. In some embodiments, the support members 257 can be coupled to the ribs 252. In other embodiments, the support members 257 can be monolithically formed with the ribs 252. In either embodiment, the support members 257 couple the ribs 252 to each other. In this way, the support members 257 provide structural support for the insert 250. The insert 250 can include a plurality of support members 257. For example, the insert can include at least a first support member disposed proximate the first rib end 258 and a second support member disposed proximate the second rib end 259.

Referring again to FIG. 3B, in some embodiments, the insert 250 includes the inlet portion 260. The inlet portion 260 is disposed at the first rib end 258. In some embodiments, the insert 250 includes an outlet portion 262. The outlet portion 262 is disposed at the second rib end 259. Each of the plurality of ribs 252 extends from the inlet portion 260 to the outlet portion 262. In some embodiments, the insert 250 includes an insert wall 264 disposed between the inlet portion 260 and the outlet portion 262. The insert wall 264 extends between first inner surface 210 and the second inner surface 212, such that the insert wall 264 fluidly separates the inlet portion 260 and the outlet portion 262.

In an example embodiment, the inlet portion 260 is defined between the insert wall 264, the first end wall 255, the second end wall 256, and the first rib end 258. The inlet portion 260 may be fluidly coupled to (e.g., in fluid communication with) at least one of the. More specifically, the inlet portion 260 may receive a fluid from the passageway. The inlet portion 260 may direct the fluid to flow into the flow channels at the first rib end 258. In this way, the plurality of flow channels are fluidly coupled to the passageway (e.g., via the inlet portion 260).

In some embodiments, the cooling jacket 300 may include a plurality of recess cavities 302 which are configured to receive the plurality of segmented inverters 108. Each segmented inverter 108 may be operatively coupled with one an electrical machine controller (not shown) and the inverter 108 may be operated separately and independently from each other. In the example embodiment shown in FIG. 3A, the cooling jacket 300 has a total of eight recess cavities which are configured to receive a total of eight segmented inverters 108 as shown in FIG. 1. However, it will be appreciated that any appropriate number of recess cavities 302/segmented inverters 108 may be included in the electrical machine 100.

In some examples, the segmented inverters 108 may be formed as modular or segmented components which may be installed separately. Each of the groups of stator windings 110 are configured to be connected to a segmented inverter 108. For example, a first group of stator windings 110 may be connected to the first segmented inverter 108. In some embodiments, each of the plurality of segmented inverters 108 are three-phase power inverters. It is to be understood that although three-phase inverter is referred to herein, the segmented inverters 108 may alternatively be inverters of different phases such as six-phase inverters, for example.

Referring now to FIGS. 5 - 6, front and back views of a segmented inverters 108 are shown in more detail, according to an example embodiment. In some embodiments, each segmented inverter 108 includes an AC terminal 504 which is configured to electrically connect to a portion of the stator windings 110. In some embodiments, each of the segmented inverters 108 also includes a DC terminal 502 which is configured to electrically connect the segmented inverters 108 to the power connection ring 106. In some embodiments, each of the segmented inverters 108 are configured to receive DC power from the power connection ring 106 and convert the DC power to AC power to be used by the electrical machine.

In some embodiments, the segmented inverters 108 may include a thin coat of thermal interface material 506. In some embodiments, the thermal interface material 506 may be non-coating material such as phase change materials (PCMs). The thermal interface material 506 may be configured to enhance the thermal coupling between the segmented inverters 108 and the recessed cavities of 302. Further the thermal interface material 506 may improve the smoothness of the segmented inverters 108 which further improves the coupling of the segmented inverters 108 with the recess cavities 302.

In some embodiments, the each of the plurality of segmented inverters 108 includes a printed circuit board comprising a controller or control module configured to control the functionality of the segmented inverter 108. In some embodiments, the printed circuit board includes a power stage or power module electrically connected to the controller or control module.

In some embodiments, the segmented inverters 108 include a positive DC terminal or busbar 510 to which the positive DC power connection is electrically coupled and a negative DC terminal or busbar 508 to which the negative DC power connection is electrically coupled.

As shown in FIG. 2, the DC power connection ring 106 includes positive leads 204 and negative leads 202. In the example embodiment described herein, each of the segmented inverters 108 is electrically coupled a positive DC power connection (e.g., lead) 204 and a negative DC power connection (e.g., lead) 202. In some embodiments, the DC power connection ring 106 includes lamination which electrically isolates the positive DC power connection 204 and the negative DC power connection 202 from each other and any other surrounding components (e.g., other conductors like the casing, etc.) to prevent any unwanted shorting. Using lamination to isolate the power connection ring 106 makes an air gap unnecessary which provides a number of benefits including more compact design of the electrical machine 100. Further, as shown in FIG. 2, the DC power connection ring 106 is coupled to the bottom side of the cooling jacket 300. Placing the DC power connection ring 106 at the bottom of cooling jacket 300 facilitates easier connection of the electrical machine 100 to an external DC power source and makes for a more compact design of the electrical machine 100.

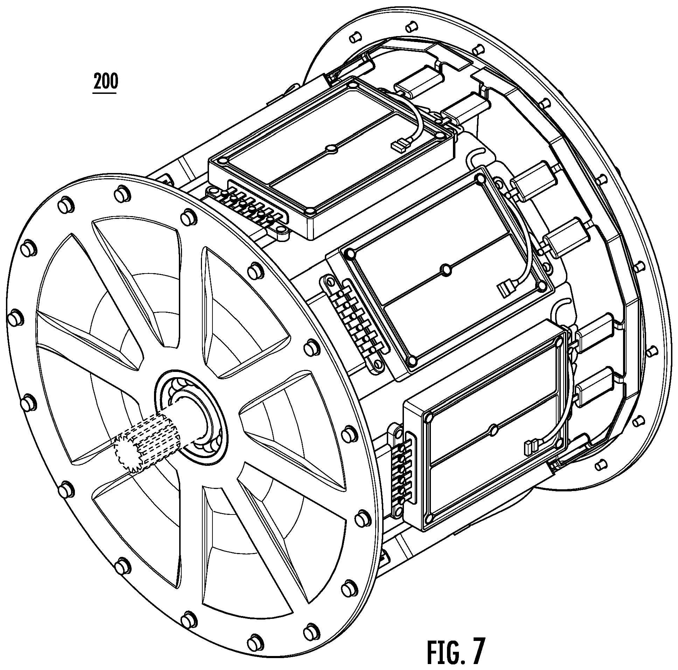

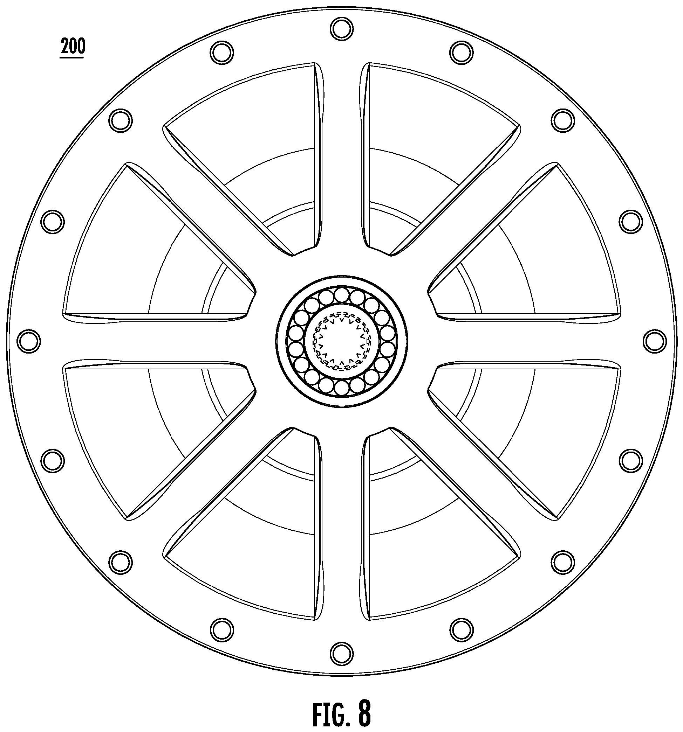

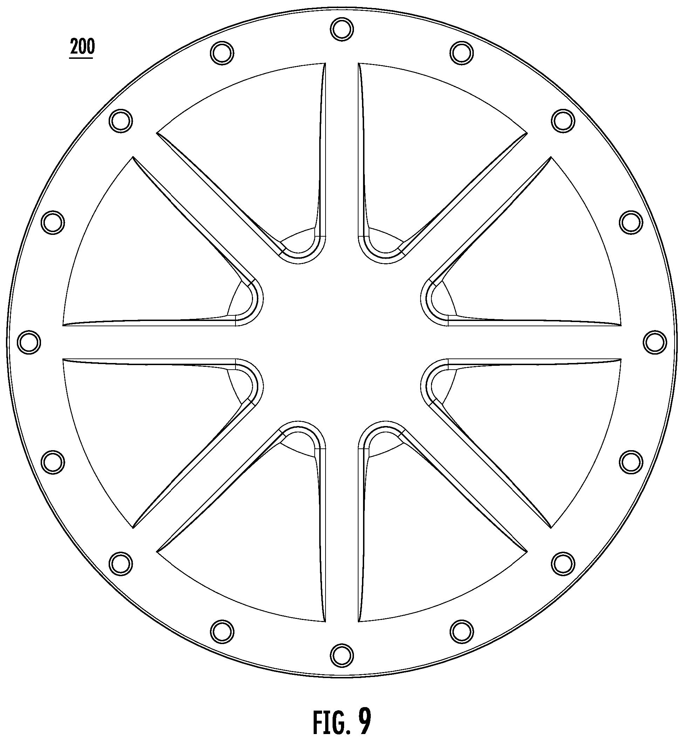

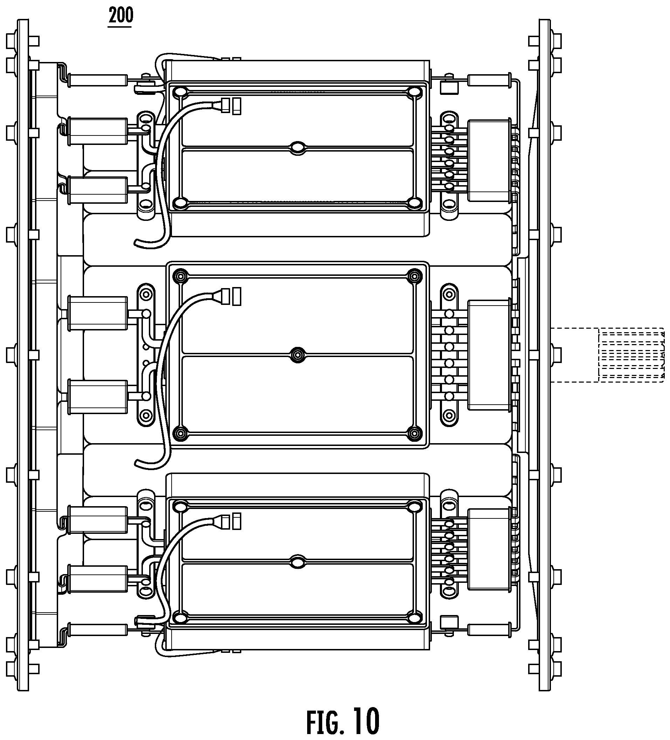

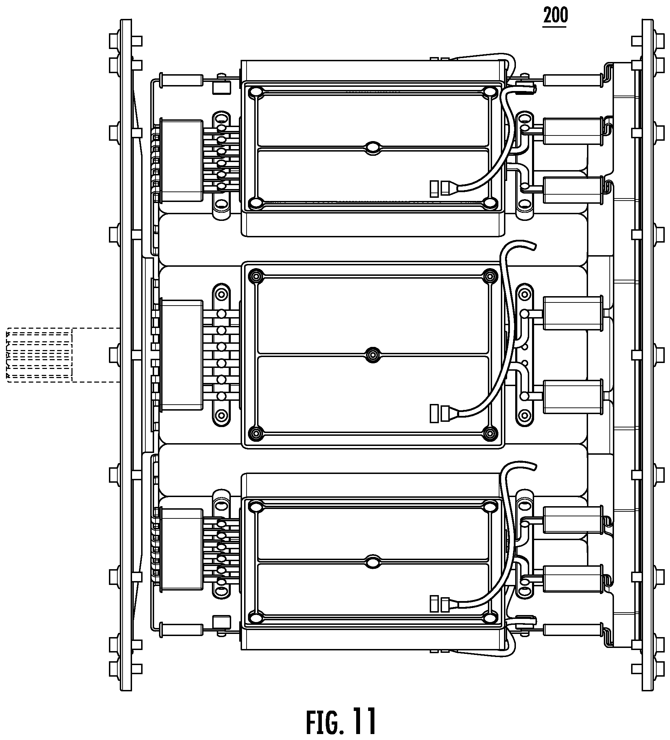

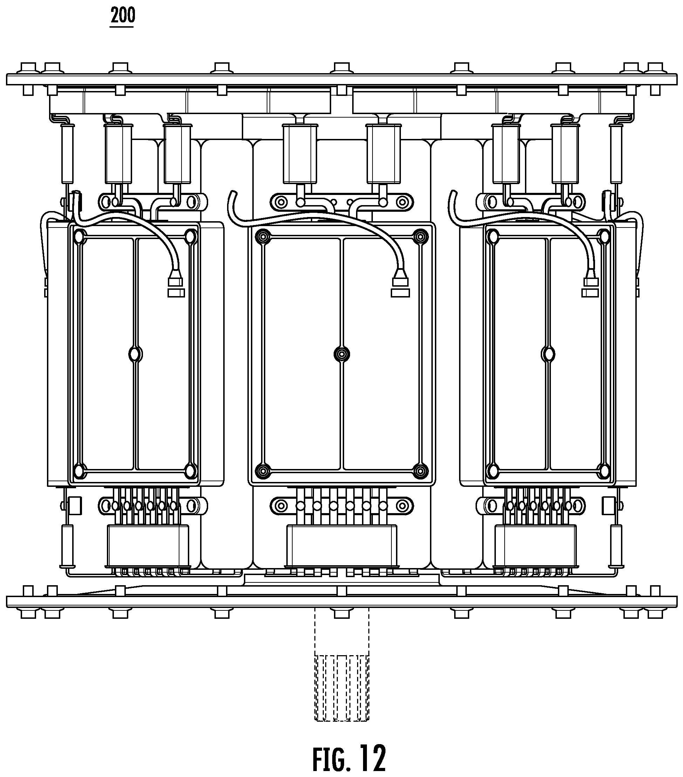

FIGS. 7-12 show various views of an electrical machine 200, according to an example embodiment. In some embodiments, the electric machine 200 can be or include a motor generator configured to generate motion. In some embodiments, the electric machine 200 can be or include a device configured to generate electricity. In some embodiments, the electrical machine 200 is similar to the electrical machine 100 and includes many of the same components described above with respect to the electrical machine 100. For example, the electrical machine 100 may include a stator, rotor, cooling jacket, and one or more segmented inverters as described above.

It should be noted that the term "example" and variations thereof, as used herein to describe various embodiments, are intended to indicate that such embodiments are possible examples, representations, or illustrations of possible embodiments (and such terms are not intended to connote that such embodiments are necessarily extraordinary or superlative examples).

The term "coupled" and variations thereof, as used herein, means the joining of two members directly or indirectly to one another. Such joining may be stationary (e.g., permanent or fixed) or moveable (e.g., removable or releasable). Such joining may be achieved with the two members coupled direction to each other, with the two members coupled to each other using a separate intervening member and any additional intermediate members coupled with one another, or with the two members coupled to each other using an intervening member that is integrally formed as a single unitary body with one of the two members. If "coupled" or variations thereof are modified by an additional term (e.g., directly coupled), the generic definition of "coupled" provided above is modified by the plain language meaning of the additional term (e.g., "directly coupled" means the joining of two members without any separate intervening member), resulting in a narrower definition than the generic definition of "coupled" provided above. Such coupling may be mechanical, electrical, or fluidic.

References herein to the positions of elements (e.g., "top," "bottom," "above," "below") are merely used to describe the orientation of various elements in the FIGURES. It should be noted that the orientation of various elements may differ according to other example embodiments, and that such variations are intended to be encompassed by the present disclosure.

The hardware and data processing components used to implement the various processes, operations, illustrative logics, logical blocks, modules and circuits described in connection with the embodiments disclosed herein may be implemented or performed with a general purpose single- or multi-chip processor, a digital signal processor (DSP), an application specific integrated circuit (ASIC), a field programmable gate array (FPGA), or other programmable logic device, discrete gate or transistor logic, discrete hardware components, or any combination thereof designed to perform the functions described herein.

A general-purpose processor may be a microprocessor, or, any conventional processor, controller, microcontroller, or state machine. A processor also may be implemented as a combination of computing devices, such as a combination of a DSP and a microprocessor, a plurality of microprocessors, one or more microprocessors in conjunction with a DSP core, or any other such configuration. In some embodiments, particular processes and methods may be performed by circuitry that is specific to a given function.

The memory (e.g., memory, memory unit, storage device) may include one or more devices (e.g., RAM, ROM, Flash memory, hard disk storage) for storing data and/or computer code for completing or facilitating the various processes, layer and modules described in the present disclosure. The memory may be or include volatile memory or non-volatile memory, and may include database components, object code components, script components, or any other type of information structure for supporting the various activities and information structures described in the present disclosure. According to an example embodiment, the memory is communicably connected to the processor via a processing circuit and includes computer code for executing (e.g., by the processing circuit or the processor) the one or more processes described herein.

It is important to note that the construction and arrangement of system as shown in the various example embodiments is illustrative only. Additionally, any element disclosed in one embodiment may be incorporated or utilized with any other embodiment disclosed herein. For example, the system of the example embodiment described in reference to FIGS. 3 and 4 may be incorporated in the system of the example embodiment described in reference to FIG. 1. Although only one example of an element from one embodiment that can be incorporated or utilized in another embodiment has been described above, it should be appreciated that other elements of the various embodiments may be incorporated or utilized with any of the other embodiments disclosed herein.

## Claims

1. An electrical machine comprising:
a cooling jacket defining a plurality of recess cavities, the cooling jacket configured to maintain the temperature of the electrical machine below a pre-determined threshold;
a plurality of segmented inverters, each of the plurality of segmented inverters received within one of the plurality of recess cavities of the cooling jacket;
a plurality of stator windings electrically coupling the plurality of the segmented inverters to an alternating current (AC) terminal; and
a direct current (DC) power connection ring comprising:
a positive DC power connection electrically coupling the plurality of segmented inverters with a positive DC power source; and
a negative DC power connection electrically coupling the plurality of segmented inverters with a negative DC power source.

2. The electrical machine of claim 1, wherein each of the plurality of segmented inverters operate independently of each other.

3. The electrical machine of claim 1, wherein the DC power connection ring comprises lamination, the lamination isolating the positive DC power connection and the negative DC power connection in the DC power connection ring.

4. The electrical machine of claim 1, wherein each of the plurality of segmented inverters comprises:
a control module configured to control the functionality of the segmented inverter;
a power module electrically coupled to the control module;
at least one positive DC busbar to which the positive DC power connection is electrically coupled; and
at least one negative DC busbar to which the negative DC power connection is electrically coupled.

5. The electrical machine of claim 1, wherein each of the plurality of segmented inverters are three-phase power inverters, or wherein each of the plurality of segmented inverters are six-phase power inverters.

6. The electrical machine of claim 1, wherein the DC power connection ring is coupled to a bottom side of cooling jacket.

7. The electrical machine of claim 1, further comprising a back plate and a front plate, wherein the back plate is on the opposite end of the electrical machine from the front plate and wherein the back plate and the front plate make up at least a portion of a housing for the electrical machine.

8. The electrical machine of claim 1, further comprising:
a stator comprising a plurality of teeth projecting radially inwards, wherein the plurality of teeth defines a plurality of slots that accommodate the plurality of stator windings; and
a rotor disposed within the stator and configured to rotate within the stator to generate electricity for the electric machine.

9. The electrical machine of claim 8, wherein the plurality of stator windings are pre-formed coils which are placed on the plurality of teeth.

10. The electrical machine of claim 1, wherein the plurality of stator windings are at least one of flat wire windings or hairpin windings.

11. The electrical machine of claim 1, wherein the plurality of stator windings are grouped into a plurality of sub-groups of stator windings and wherein each of the plurality of sub-groups of stator windings are coupled to a single segmented inverter of the plurality of segmented inverters.

12. The electrical machine of claim 11, wherein each of the plurality of sub-groups of stator windings are three-phase systems of windings which create three complete and independent phases without being connected to the other sub-groups of stator windings.

13. The electrical machine of claim 12, wherein each of the plurality of sub-groups of stator windings are coupled to the plurality of segmented inverters through a plurality of terminals which are structured as isolated separators.

14. The electrical machine of claim 1, wherein the cooling jacket includes eight recess cavities configured to receive eight segmented inverters.

15. The electrical machine of claim 1, wherein the plurality of segmented inverters includes a thin coat of thermal interface material configured enhance the thermal coupling between the plurality of segmented inverters and the plurality of recessed cavities.
